# EUROPEAN PATENT APPLICATION

(11) **EP 2 669 036 A2**
(43) Date of publication of application: **04.12.2013**
(21) Application number: 13169797.1
(22) Date of filing: 29.05.2013
(51) Int. Cl.: B23H 1/02, B23K 9/04, B23H 9/00, B23H 9/10

(54) **Hybrid electro-spark deposition and machining method and system**

(30) Priority: 31.05.2012 CN 201210177696
(71) Applicant: General Electric Company, Schenectady, New York 12345 (US)
(72) Inventor: LIU, Yong, Niskayuna, NY New York 12309 (US); CRETEGNY, Laurent, Niskayuna, NY New York 12309 (US); CHEN, Xiaobin, Niskayuna, NY New York 12309 (US); CAI, Guoshuang, Niskayuna, NY New York 12309 (US); PENG, Zhixue, Niskayuna, NY New York 12309 (US); WU, Yingna, Niskayuna, NY New York 12309 (US); WU, Yong, Niskayuna, NY New York 12309 (US)
(74) Representative: Cleary, Fidelma

(57) **Abstract**

A hybrid deposition and machining method is provided. The method comprises depositing a powder material onto a substrate 202 in a first operation and removing material from said substrate 202 in a second operation. The first operation comprises: setting operating parameters of an electrode 102 to allow for material deposition; feeding a powder material into a discharging gap between the electrode 102 and the substrate 202; and tracing the electrode 102 across a surface of the substrate 202 at a preselected distance. The second operation comprises: changing at least one operating parameter of the electrode 102 selected from a group consisting of reversing voltage polarity on the electrode 102 and substrate 202, and increasing peak current; and removing material from the substrate 202 by tracing the electrode 102 across a surface of the substrate 202 at a preselected distance.

## Description

The present invention relates generally to a hybrid deposition and machining method and system, and, more specifically, to a hybrid deposition and machining method and system capable of repairing components by depositing material onto and removing material from the components with a same setup.

It is well known that mechanical components such as gears and blades undergo micro-pitting and cracking during service, due to material issues and/or prolonged running even in a well-lubricated running condition. The damages happen essentially due to the high stresses at the mating interface, for example, at tooth of gears and tip/trailing edges of blades. Restoring the mating interfaces of the damaged components become an important issue and it is a challenge to get them back to operable condition with appropriate repair technique, as it may be expensive to replace those damaged components.

In some circumstances, repairing a damaged component may require both material build-up and pre/post-machining processes. Therefore, efforts have been made to carry out such material build-up and removal by way of a combined repairing process. A typical method is to deposit material with traditional electro-spark deposition and remove material with traditional mechanical machining. For example, U. S. patent No. 7, 140, 952 tried to remove material from a portion of a surface of a gas turbine blade by traditional mechanical machining and simultaneously deposit an antioxidation layer on the machined portion of the surface of the blade by traditional electro-spark deposition. U. S. patent application publication No. 2009/0056096 tried to repair a turbine engine component by depositing material to the damaged area with traditional electro-spark deposition and machining the deposit material, for example, by grinding, to restore the surface to a desired specification.

However, in some circumstances, such as in-situ repair, it may be not convenient to repeatedly change the machines, for example, to change between an electro-spark deposition machine and a mechanical machining device, to realize the combined material deposition and removal repairing process.

Therefore, it is desired to provide an effective way to repair/restore components, especially for in-situ repair, and there is a need of method and system capable of both material build-up and pre/post-machining process.

One aspect of the present disclosure is a hybrid deposition and machining method. The method comprises depositing a powder material onto a substrate in a first operation and removing material from said substrate in a second operation. The first operation comprises: setting operating parameters of an electrode to allow for material deposition; feeding a powder material into a discharging gap between the electrode and the substrate; and tracing the electrode across a surface of the substrate at a preselected distance. The second operation comprises: changing at least one operating parameter of the electrode selected from a group consisting of reversing voltage polarity on the electrode and substrate, and increasing peak current; and removing material from the substrate by tracing the electrode across a surface of the substrate at a preselected distance.

Another aspect of the present disclosure is a machining method. The method comprises removing material from a substrate by tracing an electrode across a surface of the substrate at a preselected distance, while introducing a dry powder material into a discharging gap between the electrode and the substrate as discharge medium.

Another aspect of the present disclosure is a hybrid deposition and machining system. The system comprises an electrode capable of depositing powder material onto a substrate in a first operation and removing material from the substrate in a second operation; a powder feeding device comprising at least one powder feeding channel for introducing a powder material into a discharging gap between the electrode and the substrate in the first operation; and a switching device for realizing switch between the first and second operations by changing at least one operating parameter of the electrode selected from a group consisting of reversing voltage polarity on the electrode and substrate, and increasing peak current.

Various aspects, features, and advantages of the present disclosure will become more apparent in light of the subsequent detailed description when taken in conjunction with the accompanying drawings in which:
FIG. 1 is a schematic diagram of an exemplary hybrid deposition and machining system in accordance with one embodiment of the present disclosure;
FIG. 2 is a time-current curve of an exemplary power supply module for material deposition;
FIG. 3 is a time-current curve of an exemplary power supply module for material removal; and
FIG. 4 is a photograph showing compare of the surface roughness of a component before and after machining by a hybrid deposition and machining system in accordance with one embodiment of the present disclosure.

Embodiments of the present disclosure will be described with reference to the accompanying drawings. In the subsequent description, well-known functions or constructions are not described in detail to avoid obscuring the disclosure in unnecessary detail.

Approximating language, as used herein throughout the specification and claims, may be applied to modify any quantitative representation that could permissibly vary without resulting in a change in the basic function to which it is related. Accordingly, a value modified by a term or terms, such as "about," is not to be limited to the precise value specified. In certain embodiments, the term "about" means plus or minus ten percent (10%) of a value. For example, "about 100" would refer to any number between 90 and 110. Additionally, when using an expression of "about a first value - a second value," the about is intended to modify both values. In some instances, the approximating language may correspond to the precision of an instrument for measuring the value or values.

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner.

Unless defined otherwise, technical and scientific terms used herein have the same meaning as is commonly understood by one of skill in the art to which this invention belongs. The terms "first," "second," and the like, as used herein do not denote any order, quantity, or importance, but rather are used to distinguish one element from another. Also, the terms "a" and "an" do not denote a limitation of quantity, but rather denote the presence of at least one of the referenced items.

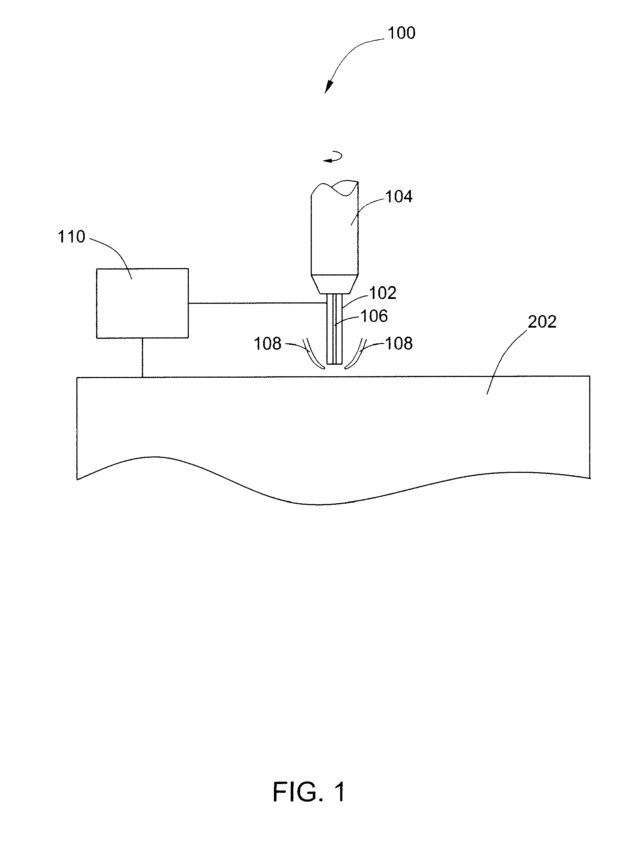

In one aspect of the present disclosure, a hybrid deposition and machining system is provided. The system is capable of alternatively and/or alternately depositing material onto and removing material from a component with a same electrode and thereby is capable of material deposition and removal combined repair. In embodiments of the present disclosure, referring to FIG. 1, a hybrid deposition and machining system 100 comprises an electrode 102 capable of depositing powder material onto a substrate 202 in a first operation and removing material from the substrate 202 in a second operation; a powder feeding device comprising at least one powder feeding channel 106/108 for introducing a powder material into a discharging gap between the electrode 102 and the substrate 202 in the first operation; and a switching device 110 for realizing a switch between the first and second operations by changing at least one operating parameter of the electrode selected from a group consisting of reversing voltage polarity on the electrode and substrate, and increasing peak current.

In certain embodiment, the powder material introduced into the discharging gap between the electrode 102 and the substrate 202 is electrically conductive. The conductive powder material particles (powder particles) in the discharging gap become energized and come close to each other. The subsequent interlocking between the powder particles takes place due to variation in their shape and size. Therefore, the powder particles in the discharging gap arrange themselves in the form of chain and act as series particle electrodes. The chain formation helps in bridging the discharging gap between the electrode 102 and the substrate 202. Due to the bridging effect of the powder particles, effective material deposition and removal may be realized even at an increased discharging gap. That is to say, with powder addition, the discharging gap between the electrode and the substrate can be increased, and thus electrode wear can be decreased, as compared to electro-spark deposition systems without powder addition. Therefore, the hybrid electro-spark deposition and machining process may be operated in a non-contact condition so that there is less or even no electrode wear as compared to electro-spark deposition systems in which no powder is fed into the discharging gap and following contact mechanical machining, which will benefit the hard surface repair and polishing.

Either the electrode or the powder material, or both may comprise materials suitable for deposition and for the intended purpose of a particular coating. Several nonlimiting examples of potential electrode materials include copper, brass, stainless steel, nickel based alloys, tungsten, graphite, and combinations thereof. Several nonlimiting examples of powder materials include stainless steel, nickel based alloys, and nickel coated Al₂O₃, and combinations thereof. If desired, graded and composite coatings may be deposited, for example, by choosing different electrodes and/or powder materials and controlling feed rate of the powder material.

The powder feeding channel of the powder feeding device may be configured within or outside the electrode. For example, the powder feeding device may comprise a powder feeding channel configured within the electrode. The powder feed channel within the electrode may comprise any structurally suitable type of channel with several examples including, but not limited to, holes, slots, and annular grooves. Alternatively or additionally, the powder feeding device may comprise a powder feeding channel provided outside the electrode. In certain embodiments, the powder feeding device comprises a powder feeding channel at least partially surrounding the electrode, which may comprise an annular groove surrounding the electrode, or a plurality of channels that substantially surrounds the electrode. In the illustrated embodiment, the powder feeding device comprises an internal powder feeding channel 106 within the electrode 102, and a plurality of external powder feeding channels 108 provided in a plurality of powder feeding nozzles surrounding the electrode 102.

The powder feeding device may further comprise a powder feeder (not shown) for delivering powder to the powder feeding channel 106/108.

The powder material may be fed into the discharging gap in a dry or wet condition. That is to say, the powder material may be fed into the discharging gap in a form of dry powder or powder-liquid mixture. The term "dry" or "dry powder" as used herein, means that there is no liquid intentionally added to the powder material, but it should not exclude powder material affected by exposure to atmospheric humidity. In certain embodiments, "dry powder" means powder material that includes less than about 10% by weight of moisture content. In a dry condition, dry powder is usually carried by a carrier gas. The carrier gas may be either reactive gases, such as oxygen, or inert gases, such as argon.

In certain embodiments, the powder feeding device comprises a dry powder feeding device, for feeding dry powder into the discharging gap in both a first operation for material deposition and a second operation for material removal.

In certain embodiments, the powder feeding device comprises a dry powder feeding device for feeding dry powder into the discharging gap in the first operation for material deposition, and a wet powder feed device for feeding a powder-fluid mixture into the discharging gap in the second operation for material removal.

In certain embodiment, besides the powder feeding device for feeding powder material into the discharging gap in the first operation, the hybrid deposition and machining system further comprises a mist feeding device for introducing a mist into a discharging gap between the electrode and the substrate in the second operation.

The term "mist", as used herein, means a heterogenous mixture of small liquid droplets suspended in a gas. In certain embodiments, the liquid droplets may be between 0.1 and 100 microns and preferably between 0.5 and 20 microns in size. In certain embodiment, the mist is an insulating liquid-gas mist mixture. Several nonlimiting examples of insulating liquid-gas mist mixture include water mist with nitrogen and kerosene mist with nitrogen. Different from the conductive powder material mixed gas (conductive powder material carried by a carrier gas), the insulating liquid-gas mist mixture fed into the discharging gap functions only as the dielectric medium and flush agent. In certain embodiments, the mist feeding device comprises a nozzle for producing a mist and feeding the mist into the discharging gap between the electrode and substrate. In certain specific embodiments, a high-pressure spraying nozzle is used to produce a mist and feed the mist into the discharging gap. In more specific embodiments, the pressure for producing and feeding the mist ranges from 40psi to 60psi.

The hybrid electro-spark deposition and machining system may be operated in open air environment, which greatly facilitates hybrid deposition and machining process, such as in-situ component repair process.

In certain embodiment, the switching device 110 comprises a circuit for reversing voltage polarity on the electrode and substrate. By reversing voltage polarity on the electrode and substrate, the hybrid deposition and machining system can be manually or automatically switched between a first status enabling material deposition and a second status enabling material removal. For example, when material deposition is desired, the electrode is connected to positive polarity and the substrate is connected to negative polarity. When material removal is desired, the polarity on the electrode and substrate is reversed to have the electrode connected to negative polarity and the substrate connected to positive polarity. Therefore, the hybrid deposition and machining system is able to switch between material depositing and material removing conveniently and flexibly during a repair process or other operations.

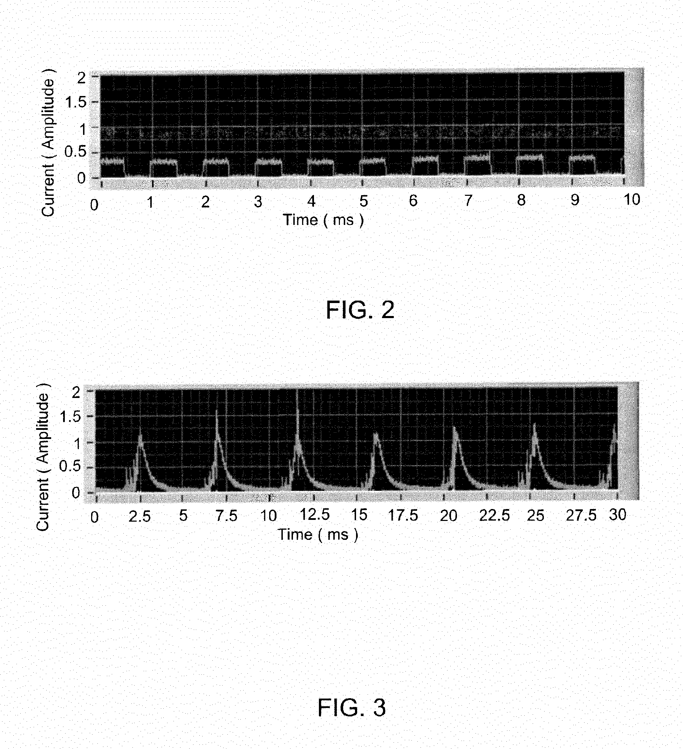

In certain embodiment, the switching device 110 comprises a power supply comprising two modules, which enables the electrode to deposit powder material onto the substrate, and to remove material from the substrate, respectively. In one embodiment, one of the modules provides current as shown in FIG. 2, which is suitable for material deposition, whereas the other module provides current as shown in FIG. 3, which is suitable for material removal. Therefore, by a manual or automatic switch between the two modules, a switch between material depositing and material removing processes can be realized conveniently and flexibly.

In another aspect of the present disclosure, a hybrid deposition and machining method is provided. The method is able to repair components by depositing material onto and removing material from the components with a same electrode. In embodiments of the present disclosure, the method comprises depositing a powder material onto a substrate in a first operation and removing material from said substrate in a second operation. The first operation comprises: setting operating parameters of an electrode to allow for material deposition; feeding a powder material into a discharging gap between the electrode and the substrate; and tracing the electrode across a surface of the substrate at a preselected distance. The second operation comprises: changing at least one operating parameter of the electrode selected from a group consisting of reversing voltage polarity on the electrode and substrate, and increasing peak current; and removing material from the substrate by tracing the electrode across a surface of the substrate at a preselected distance. In certain embodiments, the preselected distance between the electrode and the substrate is in a range of 20-200µm or preferably in a range of 20-100µm

In certain embodiments, the step of setting operating parameters of an electrode to allow for material deposition comprises: setting a voltage across the discharging gap in a range of 50-150V or preferably in a range of 100-150V, a peak current of the electrode in a range of 40-150A or preferably in a range of 90-150A. In certain embodiments, increasing peak current comprises increasing the peak current to a value greater than 150A.

In certain embodiments, the step of setting operating parameters of an electrode to allow for material deposition comprises: connecting the electrode to positive polarity and connecting the substrate to negative polarity. In certain embodiments, the step of changing at least one operating parameter of the electrode comprises: reversing voltage polarity on the electrode and substrate by connecting the electrode to negative polarity and connecting the substrate to positive polarity.

In certain embodiments, the powder material introduced into the discharging gap is electrically conductive and acts as series particle electrodes for bridging the discharging gap such that the electro-spark deposition can be carried out at an increased discharging gap. The powder material may be fed into the discharging gap in a dry or wet condition. That is to say, the powder material may be fed into the discharging gap in a form of dry powder or powder-liquid mixture.

In certain embodiments, the powder material is fed into the discharging gap in form of dry powder and is carried by a carrier gas, and the step of changing at least one of operating parameters further comprises: increasing or reducing a flow rate of the carrier gas. In one embodiment, the flow rate of the carrier gas ranges from 5 L/min to 15 L/min in the first operation, and the step of changing at least one of operating parameters further comprises: increasing the flow rate of the carrier gas to a value greater than 20 L/min.

In certain embodiments, changing at least one of operating parameters further comprises reducing feed rate of the powder material. In one embodiment, reducing feed rate of the powder material comprises reducing the feed rate of the powder material to zero. In certain embodiments, changing at least one of operating parameters further comprises replacing the powder material with another powder material. In certain embodiments, changing at least one of operating parameters further comprises replacing feeding a powder material into the discharging gap with introducing a mist into the discharging gap as dielectric medium.

In certain embodiments, said hybrid deposition and machining process is carried out in an open air atmosphere.

In the system and method as described hereinabove, the material for deposition is used in the form of powder during the first operation. With the use of a pulsed direct current power supply, making the substrate cathode, the powder material can be deposited at desired locations using a very low heat input, also associated with very rapid cooling rates. Consumption of the electrode may be substantially reduced or even avoided. The use of a non-consumable electrode facilitates the employment of any filler material composition that is needed for deposition on the surfaces to repaired/modified. In certain embodiments, when the electrode and the powder are made from different materials and the powder material is intended to be deposited rather than the electrode material, the electrode may be coated with the powder material to avoid contamination from the electrode material.

### Example:

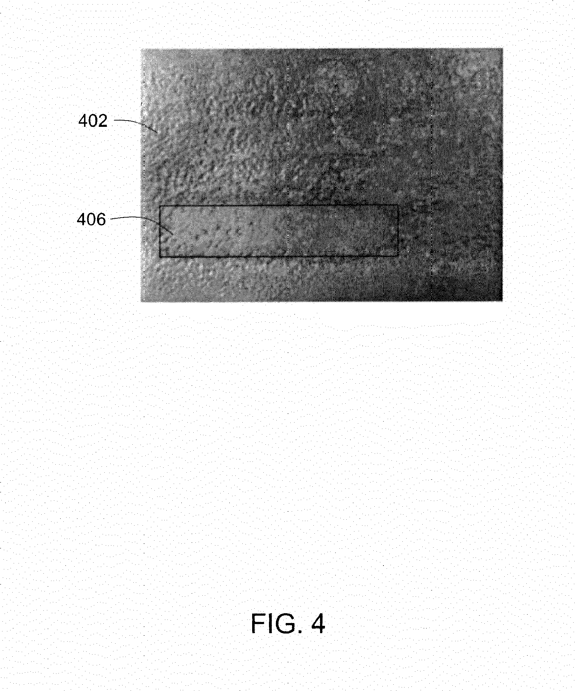

A hybrid deposition and machining system as shown in FIG. 1, which has a hollow brass electrode with an outer diameter of 5.5mm and an inner diameter of 4mm, was used to deposit an nickel based super alloy Inconel 718 (IN718) powder material with particle size of 10∼45µm onto a surface of an IN718 substrate and then machine the surface of the substrate, while the IN718 powder material was continuously fed into the discharging gap between the electrode and substrate. Firstly, the electrode was connected to positive polarity while the substrate was connected to negative polarity, and the peak current of the electrode was set at about 120A, to allow for material deposition. The electrode was traced across a surface of the substrate at a scanning speed of about 1mm/s to deposit IN718 powder material onto the surface of the substrate, while the IN718 powder material was fed into the discharging gap between the electrode and the substrate via a carrier gas. The powder feed rate was about 1g/min, and the flow rate of the carrier gas in the channel 106 was about 10L/min and the flow rate of the carrier gas in the channels 108 was about 20L/min. Then the voltage polarity on the electrode and substrate was reversed, the peak current was changed to about 40A, and the flow rate of the carrier gas was reduced to less than about 8L/min. The electrode was traced across the surface of the substrate at a scanning speed of about 2mm/s to polish (machine) the surface by removing material from the surface. FIG.4 is a photograph showing surface roughness comparison between surfaces before and after being polished (machined) by the hybrid deposition and machining system.

As shown in FIG. 4, the surface 402 before machining has surface roughness of about 13µm and the surface 406 after machining has surface roughness of about 5.7µm. The surface roughness is greatly reduced via machining by the hybrid deposition and machining system. Thus it can be seen that, through depositing a coating to a damaged component and then machining the coating to reduce its surface roughness, the hybrid deposition and machining system of the present invention is capable of repairing component and obtaining a repaired surface with a minimized surface roughness.

The invention may be embodied in other specific forms without departing from the spirit or essential characteristics thereof. The foregoing embodiments are therefore to be considered in all respects as illustrative rather than limiting on the invention described herein. The scope of embodiments of the invention is thus indicated by the appended claims rather than by the foregoing description, and all changes that come within the meaning and range of equivalency of the claims are therefore intended to be embraced therein.

Various aspects and embodiments of the present invention are defined by the following numbered clauses:
1. A hybrid deposition and machining method, comprising:
   depositing a powder material onto a substrate in a first operation and removing material from said substrate in a second operation, wherein the first operation comprises:
      setting operating parameters of an electrode to allow for material deposition;
      feeding a powder material into a discharging gap between the electrode and the substrate; and
      tracing the electrode across a surface of the substrate at a preselected distance; and
      the second operation comprises:
   changing at least one operating parameter of the electrode selected from a group consisting of reversing voltage polarity on the electrode and substrate, and increasing peak current; and
   removing material from the substrate by tracing the electrode across a surface of the substrate at a preselected distance.
2. The method of clause 1, wherein increasing peak current comprises increasing the peak current to a value greater than 150A.
3. The method of any preceding clause, wherein the powder material is carried by a carrier gas, and wherein changing at least one of operating parameters further comprises increasing flow rate of the carrier gas.
4. The method of any preceding clause, wherein the flow rate of the carrier gas ranges from 5 L/min to 15 L/min in the first operation, and wherein increasing flow rate of the carrier gas comprises increasing the flow rate of the carrier gas to a value greater than 20 L/min.
5. The method of any preceding clause, wherein changing at least one of operating parameters further comprises reducing feed rate of the powder material.
6. The method of any preceding clause, wherein reducing feed rate of the powder material comprises reducing the feed rate of the powder material to zero.
7. The method of any preceding clause, wherein the powder material comprises electrically conductive material.
8. The method of any preceding clause, wherein changing at least one of operating parameters further comprises replacing the powder material with another powder material.
9. The method of any preceding clause, wherein changing at least one of operating parameters further comprises replacing feeding a powder material into the discharging gap with introducing a mist into the discharging gap.
10. The method of any preceding clause, wherein the mist is an insulating liquid-gas mist mixture and is introduced into the discharging gap at 40-60psi.
11. The method of any preceding clause, wherein the hybrid deposition and machining is carried out in an air atmosphere.
12. A machining method, comprising:
   removing material from a substrate by tracing an electrode across a surface of the substrate at a preselected distance, while
   introducing a powder material into a discharging gap between the electrode and the substrate wherein particles of said powder function as series particle electrodes.
13. The method of any preceding clause, wherein the powder material comprises electrically conductive material.
14. The method of any preceding clause, wherein the powder material is carried by a carrier gas and a flow rate of the carrier gas is greater than 20 L/min.
15. A hybrid deposition and machining system, comprising:
   an electrode capable of depositing powder material onto a substrate in a first operation and removing material from the substrate in a second operation;
   a powder feeding device comprising at least one powder feeding channel for introducing a powder material into a discharging gap between the electrode and the substrate in the first operation; and
   a switching device for realizing a switch between the first and second operations by changing at least one operating parameter of the electrode selected from a group consisting of reversing voltage polarity on the electrode and substrate, and increasing peak current.
16. The system of any preceding clause, wherein the switching device comprises a circuit for reversing a voltage polarity on the electrode and substrate.
17. The system of any preceding clause, wherein the switching device comprises a power supply comprising two modules, power energies of which enable the electrode to deposit powder material onto the substrate, and to remove material from the substrate, respectively.
18. The system of any preceding clause, wherein the powder feeding device comprises a dry powder feeding device, for feeding dry powder into the discharging gap in both first and second operations.
19. The system of any preceding clause, wherein the powder feeding device comprises a dry powder feeding device for feeding dry powder into the discharging gap in the first operation, and a wet powder feed device for feeding a powder-fluid mixture into the discharging gap in the second operation.
20. The system of any preceding clause, further comprising a mist feeding device for introducing a mist into a discharging gap between the electrode and the substrate in the second operation.

## Claims

1. A hybrid deposition and machining method, comprising:
depositing a powder material onto a substrate (202) in a first operation and removing material from said substrate (202) in a second operation, wherein the first operation comprises:
setting operating parameters of an electrode (102) to allow for material deposition;
feeding a powder material into a discharging gap between the electrode (102) and the substrate (202) ; and
tracing the electrode (102) across a surface of the substrate ('202) at a preselected distance; and
the second operation comprises:
changing at least one operating parameter of the electrode (102) selected from a group consisting of reversing voltage polarity on the electrode and substrate, and increasing peak current; and
removing material from the substrate (202) by tracing the electrode across a surface of the substrate at a preselected distance.

2. The method of claim 1, wherein increasing peak current comprises increasing the peak current to a value greater than 150A.

3. The method of any preceding claim, wherein the powder material is carried by a carrier gas, and wherein changing at least one of operating parameters further comprises increasing flow rate of the carrier gas.

4. The method of claim 3, wherein the flow rate of the carrier gas ranges from 5 L/min to 15 L/min in the first operation, and wherein increasing flow rate of the carrier gas comprises increasing the flow rate of the carrier gas to a value greater than 20 L/min.

5. The method of any preceding claim, wherein changing at least one of operating parameters further comprises reducing feed rate of the powder material.

6. The method of claim 5, wherein reducing feed rate of the powder material comprises reducing the feed rate of the powder material to zero.

7. The method of any preceding claim, wherein the powder material comprises electrically conductive material.

8. The method of any preceding claim, wherein changing at least one of operating parameters further comprises replacing the powder material with another powder material.

9. The method of any preceding claim, wherein changing at least one of operating parameters further comprises replacing feeding a powder material into the discharging gap with introducing a mist into the discharging gap.

10. The method of claim 9, wherein the mist is an insulating liquid-gas mist mixture and is introduced into the discharging gap at 40-60psi.

11. The method of any preceding claim, wherein the hybrid deposition and machining is carried out in an air atmosphere.

12. A machining method, comprising:
removing material from a substrate (202) by tracing an electrode (102) across a surface of the substrate at a preselected distance, while
introducing a powder material into a discharging gap between the electrode (102) and the substrate (202) wherein particles of said powder function as series particle electrodes.

13. The method of claim 12, wherein the powder material comprises electrically conductive material.

14. The method of claim 12 or claim 13, wherein the powder material is carried by a carrier gas and a flow rate of the carrier gas is greater than 20 L/min.

15. A hybrid deposition and machining system (100), comprising:
an electrode (102) capable of depositing powder material onto a substrate in a first operation and removing material from the substrate in a second operation;
a powder feeding device (104) comprising at least one powder feeding channel for introducing a powder material into a discharging gap between the electrode and the substrate in the first operation; and
a switching device (110) for realizing a switch between the first and second operations by changing at least one operating parameter of the electrode selected from a group consisting of reversing voltage polarity on the electrode and substrate, and increasing peak current.
